(19) Europäisches Patentamt
European Patent Office
Office européen des brevets

(11) **EP 3 658 371 B1**

(12) **EUROPÄISCHE PATENTSCHRIFT**

(45) Veröffentlichungstag und Bekanntmachung des Hinweises auf die Patenterteilung:
**14.07.2021 Patentblatt 2021/28**

(21) Anmeldenummer: **18740234.2**

(22) Anmeldetag: **17.07.2018**

(51) Int Cl.:
**B32B 17/10** (2006.01)

(86) Internationale Anmeldenummer:
**PCT/EP2018/069372**

(87) Internationale Veröffentlichungsnummer:
**WO 2019/020432 (31.01.2019 Gazette 2019/05)**

(54) **THERMOPLASTISCHE KUNSTSTOFFFOLIE FÜR EINE VERBUNDGLASSCHEIBE**

THERMOPLASTIC FILM FOR LAMINATED GLASS

FILM THERMOPLASTIQUE POUR VERRE FEUILLETÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
**MA**

(30) Priorität: **27.07.2017 EP 17183444**

(43) Veröffentlichungstag der Anmeldung:
**03.06.2020 Patentblatt 2020/23**

(73) Patentinhaber: **SAINT-GOBAIN GLASS FRANCE**
**92400 Courbevoie (FR)**

(72) Erfinder:
• **ARNDT, Martin**
**52066 Aachen (DE)**
• **CAPPUCCILLI, Michele**
**52064 Aachen (DE)**
• **VON AVENARIUS, Wolfgang**
**52134 Herzogenrath (DE)**
• **YEH, Li-Ya**
**52511 Geilenkirchen (DE)**

(74) Vertreter: **Koenigs, Dana Anniela**
**Saint-Gobain Sekurit Deutschland GmbH & Co. KG**
**Patentabteilung**
**Glasstraße 1**
**52134 Herzogenrath (DE)**

(56) Entgegenhaltungen:
WO-A1-02/103434       WO-A1-2016/208370
WO-A1-2017/011435     WO-A2-2006/122305
US-A- 5 639 538       US-B1- 6 414 796

## Beschreibung

Die Erfindung betrifft eine thermoplastische Kunststofffolie geeignet als Zwischenschicht für eine Verbundglasscheibe, ein Verfahren zu ihrer Herstellung, eine Verbundglasscheibe, sowie ein Verfahren zu deren Herstellung und deren Verwendung.

Verbundglasscheiben werden heute an vielen Orten, insbesondere im Fahrzeugbau, verwendet. Dabei ist der Begriff Fahrzeug weit gefasst und betrifft unter anderem Straßenfahrzeuge, Flugzeuge, Schiffe, landwirtschaftliche Maschinen oder auch Arbeitsgeräte.

Auch in anderen Bereichen werden Verbundglasscheiben verwendet. Hierzu zählen beispielsweise Gebäude-Verglasungen als auch Informationsdisplays, z.B. in Museen oder als Werbedisplays.

Dabei weist eine Verbundglasscheibe im Allgemeinen zwei Glasflächen auf, die auf eine Zwischenschicht laminiert sind. Die Glasflächen selbst können eine Krümmung aufweisen und sind in aller Regel von konstanter Dicke. Die Zwischenschicht weist in aller Regel ein thermoplastisches Material, in aller Regel Polyvinylbutyral (PVB), einer vorbestimmten Dicke, z.B. 0,76 mm, auf.

Da die Verbundglasscheibe im Allgemeinen in Bezug auf einen Betrachter geneigt ist, kommt es zu Doppelbildern. Diese Doppelbilder sind dadurch bedingt, dass einfallendes Licht in aller Regel nicht vollständig durch beide Glasflächen tritt, sondern dass zumindest ein Teil des Lichtes erst reflektiert wird und erst danach durch die zweite Glasfläche tritt.

Diese Doppelbilder sind insbesondere bei Dunkelheit wahrnehmbar, insbesondere bei starken einstrahlenden Lichtquellen, wie z.B. die Scheinwerfer eines entgegenkommenden Fahrzeugs.

Diese Doppelbilder sind extrem störend. Insbesondere im Bereich von Kamerafenstern führen diese Doppelbilder zu Fehlinformationen. Kamerafenster sind Bereiche einer Scheibe, hinter denen eine Kamera angebracht ist, die Bilder von der Umgebung aufzeichnet. Solche Kamerafenster gewinnen zum Beispiel im Bereich des autonomen Fahrens an Bedeutung.

Häufig wird die Verbundglasscheibe auch als Head-Up-Display (HUD) zur Anzeige von Informationen verwendet. Dabei wird mittels einer Projektionseinrichtung ein Bild auf die Verbundglasscheibe projiziert, um dem Betrachter eine Information ins Sichtfeld einzublenden. Im Fahrzeugbereich wird die Projektionseinrichtung z.B. auf dem Armaturenbrett angeordnet, sodass das projizierte Bild auf der nächstliegenden Glasfläche der zum Betrachter geneigten Verbundglasscheibe in Richtung des Betrachters reflektiert wird.

Wiederum tritt ein Teil des Lichtes jedoch in die Verbundglasscheibe ein und wird nun z.B. an der inneren Grenzschicht der vom Betrachter aus gesehen weiter außen liegenden Glasfläche und der Zwischenschicht reflektiert und tritt versetzt anschließend aus der Verbundglasscheibe aus.

Auch hier tritt ein ähnlicher Effekt, der Effekt der Geisterbilder, in Bezug auf das darzustellende Bild auf.

Eine rein klassische Kompensation von Geisterbildern mithilfe einer Keilfolie mit unveränderlichem Keilwinkel führt dazu, dass eine Überkompensation für Doppelbilder in Transmission zu beobachten ist. Dies führt dazu, dass der jeweilige Betrachter irritiert wird oder im schlimmsten Fall eine Fehlinformation erhält. Bislang wird versucht, dieses Problem dadurch zu lösen, dass die Oberflächen der Scheiben nicht mehr parallel, sondern in einem festen Winkel angeordnet werden. Dies wird zum Beispiel dadurch erreicht, dass die Zwischenschicht eine linear ansteigende und / oder abnehmende Dicke aufweist. Im Fahrzeugbau wird typischerweise die Dicke so variiert, dass am unteren Ende der Verbundglasscheibe hin zum Motorraum die kleinste Dicke vorgesehen ist, während die Dicke zum Dach hin ansteigt; das heißt die Zwischenschicht weist eine Keilform auf.

Verbundglasscheiben dieser Art mit keilförmiger Zwischenschicht und die optischen Gesetze, auf denen sie beruhen, sind an sich bekannt und werden beispielsweise in den internationalen Patentanmeldungen WO 2015/086234 A1, WO 2015/086233 A1 und WO 2009/071135 A1, den amerikanischen Patenten US 8,451,541 B2, US 7,060,343 B2, US 6,881,472 B2, US 6,636,370 B2 und US 5,013,134 oder den deutschen Offenlegungsschriften DE 196 11 483 A1 und DE 195 35 053 A1 beschrieben.

Der erforderliche Keilwinkelverlauf und das daraus resultierende Dickenprofil der Zwischenschicht muss für jede Scheibenform gesondert berechnet werden. Bislang wird das erfindungsgemäße Dickenprofil durch Verwendung einer entsprechenden Schlitzdüse bei der Extrusion der Folie, oder aber durch gezieltes Recken der mit einem entsprechenden Temperaturprofil aufgeheizten Folie erreicht. Diese Methoden können auch kombiniert werden, indem beispielsweise das Dickenprofil in der einen Richtung durch eine entsprechende Schlitzdüse bei der Extrusion und in der anderen Richtung durch nachträgliches entsprechendes Recken der Folie erzeugt wird.

Bei dieser Art der Herstellung treten jedoch Probleme auf.

Wenn die hergestellten Folienbahnen für die Lagerung und den Versand zu Rollen aufgewickelt werden, nehmen die Rollen eine zunehmend konische Form an, was bei der Handhabung und dem Transport der Rollen zu Schwierigkeiten führt. Um diese Schwierigkeiten zu vermeiden, ist es aus dem europäischen Patent EP 0 647 329 B1 bekannt, Folienbahnen herzustellen, die an beiden Rändern auf einer Breite von wenigstens 20 % der Bandbreite ein gleichmäßiges Dickenprofil und ein anschließendes keilförmiges Dickenprofil aufweisen, das sich jeweils bis zur Mitte der Folienbahn erstreckt.

Aus der europäischen Patentschrift EP 1 063 205 B1 ist ein Verfahren zur Herstellung eines Zwischenschichtfilms für Verbundglas bekannt, bei dem man die Ausgangszusammensetzung für den Zwischenschichtfilm einer Produktionsanlage zuführt, die einen Extruder, eine Strangpressmatrize, eine erste Kühldruckwalze und eine zweite Kühldruckwalze aufweist, wobei die beiden Kühldruckwalzen jeweils eine lichte Weite haben, die entsprechend dem gewünschten Querschnittsprofil des herzustellenden Zwischenschichtfilms korrigiert wird. Bei diesem Verfahren besteht aber die Gefahr, dass der thermoplastische Kunststoff in den Kühldruckwalzen zu stark abkühlt, wodurch unbefriedigende Ergebnisse erzielt werden.

Ein weiterer Nachteil der bislang bekannten keilförmigen, thermoplastischen Kunststofffolien liegt darin, dass die Fläche des keilförmigen Profils in den HUD-Sichtfenstern sehr viel größer ist, als für eine optimale Unterdrückung der Geisterbilder notwendig ist. Zudem ist eine Herstellung mit zwei Bereichen mit unterschiedlichen Änderungen des Keilwinkels, wie es zum Beispiel für eine Anwendung in einer Verbundglasscheibe mit HUD-Bereich und Kamerafenster notwendig ist, sehr schwierig. In der europäischen Patentschrift EP 2 883 693 A1 wird vorgeschlagen, den für den HUD-Bereich vorgesehenen Abschnitt aus einer Folie auszuschneiden und dann durch einen Bereich mit keilförmigem Profil zu ersetzen. Zur Herstellung des keilförmigen Profils werden jedoch keine Vorschläge gemacht. Zudem ergeben sich an den Stellen, an denen die Folien zusammengesetzt werden, störende sichtbare Übergänge.

Aufgabe der Erfindung ist es, eine verbesserte thermoplastische Kunststofffolie mit mindestens einem Bereich mit sich änderndem Keilwinkel bereitzustellen und ein verbessertes Verfahren zu ihrer Herstellung bereitzustellen.

Die Aufgabe wird erfindungsgemäß durch eine Folie nach dem unabhängigen Anspruch 1 gelöst. Bevorzugte Ausführungsformen gehen aus den Unteransprüchen hervor.

Die Erfindung stellt eine für eine Verbundglasscheibe geeignete thermoplastische Kunststofffolie (F) bereit, die wenigstens einen festgelegten Bereich umfasst, der für ein Kamerafenster oder einen HUD-(Head-Up-Display) Bereich vorgesehen ist. Dieser festgelegte Bereich weist einen von Null verschiedenen Keilwinkel auf. Der Keilwinkel kann im festgelegten Bereich konstant sein. Diese Variante ist besonders einfach herzustellen.

Bevorzugt weist der festgelegte Bereich einen sich ändernden Keilwinkel auf. In dem festgelegten Bereich ändert sich somit auch die Dicke $h2$ der thermoplastischen Kunststofffolie. An der Stelle, an der die thermoplastische Folie im festgelegten Bereich am dicksten ist, wird die maximale Dicke, $h2_{max}$, gemessen. Angrenzend an den festgelegten Bereich befindet sich der umgebende Bereich, in dem die thermoplastische Folie eine konstante Dicke $h1$ aufweist. Die maximale Dicke $h2_{max}$ im festgelegten Bereich ist kleiner als die Dicke $h1$ der thermoplastischen Kunststofffolie im umgebenden Bereich. Die erfindungsgemäße Folie weist demnach eine im Wesentlichen konstante Dicke $h1$ auf, außer in dem mindestens einen festgelegten Bereich, in dem die Folie überall dünner ist als im umgebenden Bereich. Bevorzugt ist der festgelegte Bereich vom umgebenden Bereich rundum eingeschlossen, das heißt der festgelegte Bereich ist allseitig vom umgebenden Bereich umgeben. Bezogen auf die Einbausituation in der fertigen Fahrzeugscheibe bedeutet das, dass der festgelegte Bereich oben (Dachkante), unten, rechts und links an den umgebenden Bereich direkt angrenzt.

Bei der Verwendung der erfindungsgemäßen Folie als Zwischenschicht in einer Verbundglasscheibe werden besonders gute Ergebnisse erzielt, da die Dicke der Verbundglasscheibe nur im festgelegten Bereich variiert und keine Zunahme der Dicke auftritt. Insbesondere in Fällen, wo der festgelegte Bereich in der Verbundglasscheibe für den Randbereich (10% Abstand von den Scheibenkanten bezogen auf die Gesamthöhe der späteren Scheibe) vorgesehen ist, können solche Zunahmen der Dicke problematisch sein. Insbesondere ergeben sich optische Vorteile, da zum Beispiel an der Dachkante die Übergänge zur Karosserie möglichst stufenlos erscheinen sollen. Bei Scheiben, die an der oberen Kante dicker sind als an der unteren Kante, sind aufwändige Maßnahmen erforderlich, um die Unterschiede auszugleichen.

Der Keilwinkel ist der an einer Stelle gemessene Winkel zwischen den Oberflächen der Folie. Die Tatsache, dass der Keilwinkel im festgelegten Bereich von Null verschieden ist, bedeutet, dass im Wesentlichen im festgelegten Bereich der Keilwinkel von Null verschieden ist. Dies schließt nicht aus, dass es einzelne Punkte im festgelegten Bereich gibt, an denen der Keilwinkel Null ist. Bei einem variablen Keilwinkelprofil kommt es nach einem Anstieg des Keilwinkels an dem Übergang zum abnehmenden Keilwinkel an dem entsprechenden Wendepunkt zu einer Stelle, an der der Keilwinkel Null ist.

Die Dicke der thermoplastischen Kunststofffolie im festgelegten Bereich ist nicht konstant, sondern ist variabel. Der Keilwinkel im festgelegten Bereich ist bevorzugt variabel und ändert sich abhängig vom Ort. Bevorzugt ändert sich der Keilwinkel in zwei orthogonal zueinander verlaufenden Richtungen (bidirektionaler Keil). Bei einer späteren Verwendung in einer Windschutzscheibe entsprechen die beiden Richtungen der vertikalen Richtung (von Dachkante zur Motorhaube bzw. von oben nach unten) und der horizontalen Richtung (von rechts nach links).

Der umgebende Bereich ist der Bereich, der direkt an den festgelegten Bereich angrenzt. Der festgelegte Bereich wird vom umgebenden Bereich eingeschlossen. Typischerweise ist die Fläche des umgebenden Bereiches größer als die Fläche des festgelegten Bereichs.

Im umgebenden Bereich hat die thermoplastische Kunststofffolie eine im Wesentlichen konstante Dicke. Das schließt nicht aus, dass die Folie herstellungsbedingt im umgebenden Bereich eine gewisse Rauheit aufweist. Eine herstellungsbedingte Rauheit unterscheidet sich jedoch von einer geplanten Abnahme der Dicke in einem zusammenhängenden Bereich. Die Dicke h1 im umgebenden Bereich beträgt bevorzugt von 50 μm bis 2000 μm, besonders bevorzugt 300 μm - 850 μm und typischerweise 380 μm bis 760 μm. Folien mit diesen Dicken geben besonders stabile Verbundglasscheiben.

Die erfindungsgemäße thermoplastische Kunststofffolie umfasst einen oder mehrere festgelegte Bereiche, in denen die Keilwinkelprofile bedarfsgerecht angepasst sind.

Die erfindungsgemäße thermoplastische Kunststofffolie erstreckt sich bei Verwendung in einer Verbundglasscheibe über die gesamte Scheibenfläche. Die Abmessungen richten sich nach dem jeweiligen Verwendungszweck und der Größe der späteren Verbundglasscheibe. Vorzugsweise haben sie eine Länge von 0,25 m bis 5 m und eine Breite von 0,25 m bis 4 m.

Die thermoplastische Kunststofffolie kann durch eine oder auch durch mehrere übereinander angeordnete, flache thermoplastische Folien ausgebildet werden.

In einer bevorzugten Ausführungsform enthält die thermoplastische Kunststofffolie zumindest einen Stoff ausgewählt aus der Gruppe, bestehend aus Polyvinylbutyral (PVB), Ethylenvinylacetat (EVA), Polyethylenterephthalat (PET), Polyurethan (PU), Polypropylen (PP), Polyacrylat, Polyethylen (PE), Polycarbonat (PC), Polymethylmethacrylat, Polyvinylchlorid, Polyacetalharzen, Gießharzen, Polyacrylaten, fluorierten Ethylen-Propylen-Copolymerisaten, Polyvinylfluorid, Ethylen-Tetrafluorethylen-Copolymerisaten sowie Copolymeren und Gemischen. Besonders bevorzugt besteht die thermoplastische Folie im Wesentlichen aus PVB. Dieses ist als Zwischenschicht für Verbundglasscheiben besonders geeignet und liefert gute Ergebnisse.

In einer weiteren bevorzugten Ausführungsform der Erfindung weist die thermoplastische Kunststofffolie eine geräuschmindernde Wirkung auf. Dadurch kann die Transmission von Geräuschen durch eine mit der thermoplastischen Kunststofffolie versehenen Verbundscheibe vorteilhaft verringert werden, wodurch eine Störung durch Umgebungsgeräusche und Fahrgeräusche vermindert werden kann. Eine solche Wirkung kann durch eine mehrlagige, beispielsweise dreilagige thermoplastische Folie erreicht werden, wobei die innere Lage (Akustik-Kern) eine höhere Plastizität oder Elastizität aufweist als die sie umgebenden äußeren Lagen, beispielsweise infolge eines höheren Anteils an Weichmachern. Besonders bevorzugt hat die thermoplastische Kunststofffolie einen mehrlagigen Aufbau, insbesondere einen dreilagigen Aufbau.

In einer bevorzugten Ausführungsform liegt die Dickendifferenz $\Delta h2_{min}$ zwischen der Dicke der thermoplastischen Kunststofffolie im umgebenden Bereich h1 und der Dicke an ihrer dünnsten Stelle im festgelegten Bereich zwischen 0,10 mm und 0,30 mm, bevorzugt zwischen 0,15 mm und 0,25 mm. Aufgrund dieser minimalen Dickendifferenz lassen sich hervorragend Verbundglasscheiben laminieren, ohne dass dadurch kritische Spannungen auftreten.

Der festgelegte Bereich für einen HUD-Bereich erstreckt sich bevorzugt über eine Fläche von 10 000 mm$^2$ bis 200 000 mm$^2$. Bevorzugt ist der HUD-Bereich bei einer Windschutzscheibe für ein Fahrzeug auf der Fahrerseite angeordnet.

Der HUD-Bereich befindet sich üblicherweise an der Fahrerseite im Durchsichtbereich der Verbundglasscheibe. Mit Durchsichtbereich wird dabei der Bereich der Scheibe bezeichnet, welcher zur Durchsicht vorgesehen und geeignet ist. Der Durchsichtbereich einer Scheibe ist insbesondere transparent und weist keine opaken, bedruckten Bereiche auf, wie beispielsweise den üblichen umlaufenden Abdecksiebdruck im Randbereich. Als transparent im Sinne der Erfindung wird eine Scheibe verstanden, die eine Transmission im sichtbaren Spektralbereich >70 % aufweist.

Bevorzugt nimmt der Keilwinkel im festgelegten Bereich in der fertigen Verbundglasscheibe von unten nach oben zunächst langsam zu, um Bildverzerrungen durch einen abrupten Anstieg zu vermeiden. Anschließend nimmt der Keilwinkel in einem zentralen Bereich entsprechend eines zuvor optimierten Profils zu, um optimal die Entstehung von Geisterbildern zu unterdrücken. Daran anschließend folgt ein Bereich, in dem der Keilwinkel langsam abnimmt, um den Übergang zur ersten thermoplastischen Folie wiederum möglichst wenig sichtbar zu gestalten. Ein solcher Keilwinkelverlauf eignet sich für Kamerafenster und HUD-Bereiche.

Der festgelegte Bereich für ein Kamerafenster erstreckt sich bevorzugt über eine Fläche von 2 000 mm$^2$ - 10 000 mm$^2$. Das Kamerafenster ist bei einer Windschutzscheibe für ein Fahrzeug bevorzugt in der Nähe der Dachkante angeordnet. Dieser Bereich gehört in der Regel nicht mehr zum Durchsichtbereich.

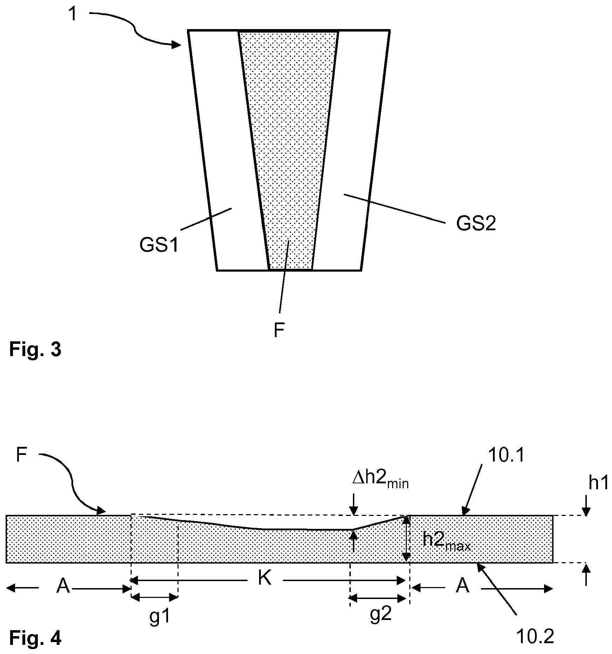

Die thermoplastische Kunststofffolie hat eine erste Oberfläche und eine gegenüberliegende zweite Oberfläche. Im umgebenden Bereich mit konstanter Dicke h1 sind die Ebenen der ersten Oberfläche und der zweiten Oberfläche parallel zueinander angeordnet. In einer bevorzugten Ausführungsform ist die Ebene der zweiten Oberfläche im festgelegten Bereich durchgehend parallel zur Ebene der ersten Oberfläche im umgebenden Bereich (siehe Ausführung in Figur 4), das heißt nur von der ersten Oberfläche ausgehend wurde im festgelegten Bereich Material abgetragen im Vergleich zum umgebenden Bereich. Daher ist im festgelegten Bereich die erste Oberfläche nicht durchgehend parallel zur Ebene der zweiten Oberfläche im umgebenden Bereich. Diese Folie ist in einem einzigen Schritt herzustellen.

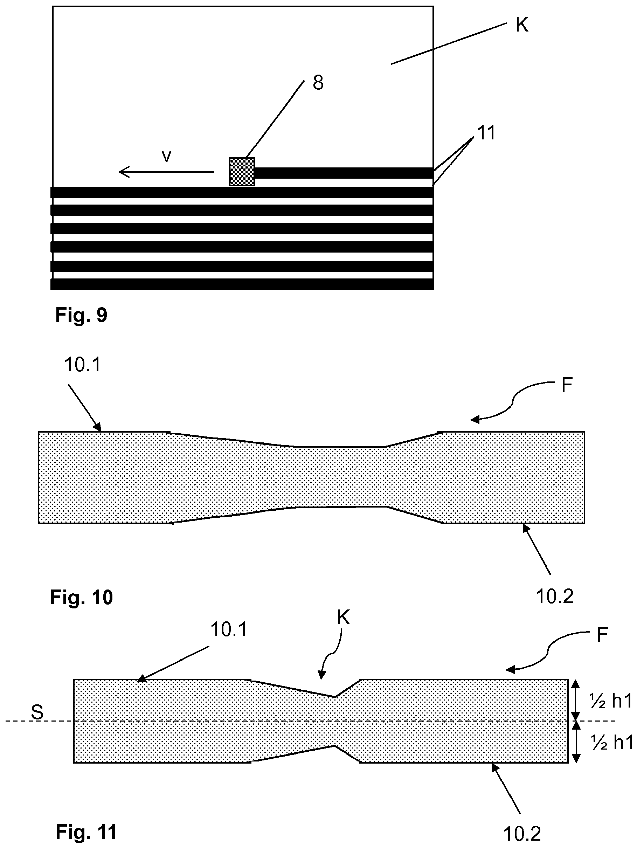

In einer weiteren bevorzugten Ausführungsform sind im festgelegten Bereich die erste Oberfläche und die zweite Oberfläche nicht parallel zu den Ebenen der ersten und zweiten Oberfläche im umgebenden Bereich. In diesem Fall ist von der Seite der ersten Oberfläche und von der Seite der zweiten Oberfläche Material abgetragen worden. Besonders bevorzugt ist dieser Materialabtrag symmetrisch erfolgt, das heißt an jeder Stelle ist von der Seite der ersten Oberfläche genau so viel abgetragen worden wie von der Seite der zweiten Oberfläche (siehe Ausführung in Figur 10). Dies führt dazu, dass die thermoplastische Kunststofffolie im festgelegten Bereich eine Spiegelebene / Symmetrieebene aufweist. Die Symmetrieebene ist parallel zu den Ebenen der ersten Oberfläche und zweiten Oberfläche im umgebenden Bereich mittig zwischen diesen Ebenen angeordnet. Diese symmetrische Ausführung führt zu besonders guten Ergebnissen. Die Ausführungsform ist besonders vorteilhaft in Kombination mit mehrschichtigen thermoplastischen Kunststofffolien, da nur die äußeren Schichten von einem jeweils geringeren Materialabtrag betroffen sind als wenn nur von einer Seite der Folie Material abgetragen wird.

In einer weiteren bevorzugten Ausführungsform umfasst die thermoplastische Kunststofffolie mehr als einen festgelegten Bereich, bevorzugt zwei festgelegte Bereiche. Dabei ist besonders bevorzugt ein erster festgelegter Bereich als HUD-Bereich vorgesehen und befindet sich im Durchsichtbereich der Scheibe und ein zweiter festgelegter Bereich ist als Kamerafenster vorgesehen und befindet sich im oberen Drittel der Scheibe. Da in der erfindungsgemäßen thermoplastischen Kunststofffolie die Keilwinkelverläufe in den festgelegten Bereichen durch eine Abnahme der Dicke realisiert sind, können mehrere festgelegte Bereiche vorgesehen werden, ohne dass es zum Auftreten erhöhter Spannungen in der fertigen Verbundglasscheibe kommt.

In einer Ausgestaltung der Erfindung kann die thermoplastische Kunststofffolie mindestens einen getönten Bereich aufweisen. Ein solch getönter Bereich an der oberen Kante der Scheibe ist dem Fachmann beispielsweise als "shaded band" bekannt - hierdurch kann eine Störung des Fahrers durch blendende Sonnenstrahlung vermindert werden.

Die thermoplastische Kunststofffolie kann in einer Ausführungsform der Erfindung eine Sonnen- oder Wärmeschutzfunktion aufweisen. Beispielsweise kann die thermoplastische Folie eine reflektierende Beschichtung im Infrarot-Bereich oder IR-absorbierende Zusätze enthalten.

Die Erfindung stellt des Weiteren ein Verfahren bereit zur Herstellung einer erfindungsgemäßen thermoplastischen Kunststofffolie, die als Zwischenschicht für eine Verbundglasscheibe geeignet ist. In einem ersten Schritt des erfindungsgemäßen Verfahrens wird eine thermoplastische Kunststofffolie mit im Wesentlichen konstanter Dicke h1 bereitgestellt. Derartige Folien, die sich als Zwischenschichten für Verbundglasscheiben eignen, sind bekannt. In einem zuvor festgelegten Bereich, wird in einem zweiten Schritt thermoplastisches Polymer mithilfe eines Lasers abgetragen. Dabei wird ein zuvor definiertes Keilwinkelprofil erzeugt. Durch die Verwendung des Lasers ist es möglich, ein zuvor mithilfe von Simulationswerkzeugen berechnetes Keilwinkelprofil präzise auf die thermoplastische Folie mit konstanter Dicke zu übertragen. Dies ist besonders vorteilhaft bei komplexeren Keilwinkelprofilen, die mit herkömmlichen Methoden nicht so präzise herstellbar sind.

Das erfindungsgemäße Verfahren ist besonders flexibel, da die Position des festgelegten Bereiches frei wählbar ist. So kann zum Beispiel eine passende Folie mit HUD-Bereich für Rechtslenker oder Linkslenker hergestellt werden, in dem an der entsprechenden Stelle thermoplastisches Polymer abgetragen wird. Da die Erzeugung des Keilwinkels durch Abtragung erfolgt, treten keine Materialunverträglichkeiten auf. Zudem werden optische Beeinträchtigungen an Schnittkanten reduziert, wenn zum Beispiel festgelegte Bereiche separat gefertigt werden und in eine Ausnehmung in einer Folie eingesetzt werden. Das erfindungsgemäße Verfahren eignet sich in besonderem Maße zur Bearbeitung von Folien, die aus mehreren Schichten mit unterschiedlichen Zusammensetzungen bestehen. Ein Beispiel ist eine Zwischenschicht mit geräuschmindernder Wirkung. Da nur geringe Mengen an Material abgetragen werden müssen, können auch solche Folien mit Keilwinkelverläufen versehen werden, ohne dass störende optische Defekte auftreten. Bevorzugt besteht so eine Zwischenschicht mit geräuschmindernder Wirkung aus drei Lagen. Bevorzugt wird mit dem erfindungsgemäßen Verfahren nur so viel Material abgetragen, dass die innere Lage nicht berührt wird. Die innere Lage kann einen anderen Brechungsindex aufweisen, sodass es zu störenden optischen Fehlern führen kann, wenn von dieser Lage Material abgetragen wird.

Das erfindungsgemäße Verfahren eignet sich in besonderem Maße zur Herstellung von thermoplastischen Kunststofffolien mit mindestens einem festgelegten Bereich, der allseitig vom umgebenden Bereich eingeschlossen ist. Eine solche thermoplastische Kunststofffolie ist mit herkömmlichen Verfahren, wie zum Beispiel offenbart in der EP 0 647 329 B1, nicht möglich. Über das dort beschriebene Verfahren sind nur thermoplastische Folien erhältlich, deren Bereich mit variierendem Keilwinkel bis an den Rand der thermoplastischen Folie reichen. Dies hat jedoch bei Verwendung in einer Verbundglasscheibe den bereits beschriebenen Nachteil, dass die Dicke der Scheibe von der oberen zur unteren Kante variiert.

Mit einem in zwei Richtungen variierenden Keilwinkel können besonders effektiv Doppelbilder und Geisterbilder vermieden oder verringert werden. Der Zusammenhang zwischen Keilwinkelverläufen und der Vermeidung und Verringerung von Geisterbildern und Doppelbildern ist im Stand der Technik bekannt und wird zum Beispiel in der WO2015086234A1 und in der WO2015086233A1 beschrieben. Bevorzugt ist der optimale Keilwinkelverlauf zuvor mithilfe von Simulationswerkzeugen optimiert worden auf die Vermeidung von Doppelbildern und Geisterbildern.

In einer bevorzugten Ausführungsform des erfindungsgemäßen Verfahrens wird zunächst die erste Oberfläche der unbearbeiteten thermoplastischen Kunststofffolie im festgelegten Bereich mit dem Laser behandelt und dort Polymer abgetragen. Anschließend wird die zweite Oberfläche der thermoplastischen Kunststofffolie in demselben festgelegten Bereich mit dem Laser behandelt. Dabei wird bevorzugt auf beiden Seiten jeweils gleichviel Polymer abgetragen (spiegelsymmetrisch). Auf diese Weise kann der Abtrag auf einer Seite reduziert werden, sodass jeweils nur oberflächlich Polymer abgetragen werden muss. Bei mehrschichtigen Folien wird so vermieden, dass von mehreren Schichten Material abgetragen wird. So wird eine optische Beeinträchtigung verursacht durch die Abtragung gering gehalten.

In einer bevorzugten Ausführungsform des erfindungsgemäßen Verfahrens beträgt die Abtragungstiefe zwischen 0,10 mm und 0,30 mm, bevorzugt zwischen 0,15 mm und 0,25 mm. Die Abtragungstiefe ist die Tiefe, in der Material abgetragen wird, verursacht durch die Wechselwirkung zwischen Laser und Material. Bei den beschriebenen Abtragungstiefen wird nur sehr oberflächlich Material abgetragen. Daher sind Dickenvariationen über die gesamte Folie sehr gering und damit ist die Folie besonders gut als Zwischenschicht für eine Verbundglasscheibe geeignet. Zudem können auch mehrschichtige Folien, insbesondere geräuschmindernde Folien bei diesen Abtragungstiefen modifiziert werden, ohne dass es zu störenden optischen Beeinträchtigungen am Rande des festgelegten Bereiches kommt.

Weiterhin schlägt die Erfindung eine Verbundglasscheibe mit erfindungsgemäßer thermoplastischer Kunststofffolie vor.

Die erfindungsgemäße Verbundglasscheibe umfasst mindestens eine erste Glasscheibe, eine zweite Glasscheibe und eine erfindungsgemäße thermoplastische Kunststofffolie, wobei die thermoplastische Kunststofffolie zwischen der ersten Glasscheibe und der zweiten Glasscheibe angeordnet ist. Die erfindungsgemäße Verbundglasscheibe mit einem lokal festgelegten Bereich mit variablem Keilwinkel ist besonders stabil, da die Dickenänderung der Folie nur auf einen vergleichsweise kleinen Bereich festgelegt ist. Bei herkömmlichen Folien mit konstantem Keilwinkel ändert sich die Dicke in vertikaler und / oder horizontaler Richtung über die gesamte Scheibenhöhe und / oder Breite, was zum Auftreten von Spannungen führt. Die Dicke bei einer solchen herkömmlichen Verbundglasscheibe ist am oberen Ende größer als am unteren Ende. Dieser Dickenunterschied führt auch zu optischen Nachteilen bei einer eingebauten Scheibe, da eine dickere Scheibenkante am Übergang zur Dachkante unter Umständen hervorsteht. Bei Verwendung einer erfindungsgemäßen thermoplastischen Folie ist die Dicke der erfindungsgemäßen Verbundglasscheibe an der oberen und unteren Kante gleich.

Die Gesamtdicke der Verbundglasscheibe beträgt in einer vorteilhaften Ausgestaltung von 3,5 mm bis 6,0 mm, bevorzugt von 4,0 mm bis 6,0 mm, besonders bevorzugt von 4,4 mm bis 5,6 mm. Verbundscheiben mit diesen Dicken weisen eine ausreichende mechanische Stabilität und Festigkeit auf und vorteilhafte akustische Eigenschaften hinsichtlich der Abschirmung von Umgebungsgeräuschen. Sie sind andererseits aber auch nicht zu dick und schwer, um als Windschutzscheibe typischer Fahrzeuge, insbesondere Kraftfahrzeuge einsetzbar zu sein.

Die Außenscheibe und die Innenscheibe weisen bevorzugt eine konstante Dicke auf mit im Wesentlichen planparallelen Hauptflächen und einer umlaufenden, diese verbindenden Seitenkante.

Die Dicke der Innenscheibe beträgt in einer vorteilhaften Ausgestaltung von 0,3 mm bis 3,5 mm, bevorzugt von 0,7 mm bis 2,6 mm.

Die Dicke der Außenscheibe beträgt in einer vorteilhaften Ausgestaltung mindestens 1,8 mm, bevorzugt mindestens 2,1 mm. Die Dicke der Außenscheibe beträgt bevorzugt höchstens 4,5 mm, bevorzugt höchstens 3,5 mm. Die Dicke der Außenscheibe beträgt in einer besonders vorteilhaften Ausgestaltung von 2,1 mm bis 4,5 mm, beispielsweise von 2,1 mm bis 3,5 mm oder von 2,5 bis 4,5 mm, bevorzugt von 2,5 mm bis 3,5 mm. In diesem Bereich weist die Verbundscheibe eine vorteilhafte mechanische Stabilität und geräuschabschirmende Eigenschaften auf, ist aber trotzdem noch hinreichend dünn und leicht, um als Windschutzscheibe eingesetzt werden zu können.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borsilikatglas, Quarzglas, Aluminosilikatglas) oder transparenten Kunststoffen (beispielsweise Polymethylmethacrylat oder Polycarbonat) gefertigt sein.

Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

Weiterhin schlägt die Erfindung ein Herstellungsverfahren für die Verbundglasscheibe vor. Dabei werden zwei Glasscheiben bereitgestellt. Zwischen diesen Glasscheiben wird die erfindungsgemäße thermoplastische Kunststofffolie platziert und das Paket aus zwei Glasscheiben und thermoplastischer Kunststofffolie wird verbunden. Bevorzugt erfolgt die Verbindung in einem Laminationsverfahren. Geeignete Verfahren zur Lamination, wie zum Beispiel das Autoklav-Verfahren oder das Vakuumsack-Verfahren sind dem Fachmann bekannt.

Weiterhin schlägt die Erfindung eine Head-Up-Display-Anordnung, eine Anordnung mit Kamera und die Verwendung von Verbundglasscheiben vor.

Kurzdarstellung der Zeichnungen

Ausführungsformen der vorliegenden Erfindung werden in exemplarischer Weise mit Bezug auf die angehängten Zeichnungen beschrieben, in denen zeigt:

Fig. 1 den prinzipiellen Zusammenhang der Entstehung von Doppelbildern in Transmission,

Fig. 2 den prinzipiellen Zusammenhang der Entstehung von Geisterbildern in Reflektion,

Fig. 3 einen exemplarischen Aufbau einer Verbundglasscheibe mit einer keilförmigen Zwischenschicht,

Fig. 4 einen Querschnitt durch einen Bereich einer erfindungsgemäßen thermoplastischen Kunststofffolie,

Fig. 5 eine Draufsicht auf eine erfindungsgemäße Verbundglasscheibe mit Kamerafenster,

Fig. 6 den prinzipiellen Aufbau einer Kamera-Anordnung,

Fig. 7 eine Draufsicht auf eine erfindungsgemäße Verbundglasscheibe mit HUD-Bereich,

Fig. 8 eine schematische Darstellung eines erfindungsgemäßen Verfahrens,

Fig. 9 eine schematische Draufsicht auf einen festgelegten Bereich während des Verfahrens,

Fig. 10 einen Querschnitt durch einen Bereich einer erfindungsgemäßen thermoplastischen Kunststofffolie und

Fig. 11 einen Querschnitt durch einen Bereich einer erfindungsgemäßen thermoplastischen Kunststofffolie.

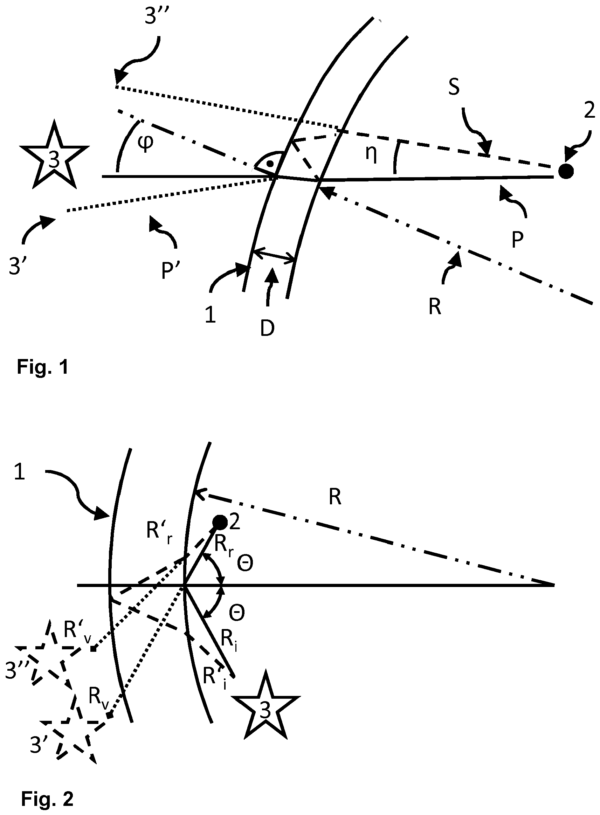

In Figur 1 ist der prinzipielle Zusammenhang der Entstehung von Doppelbildern in Transmission an Hand eines Strahlenbildes dargestellt. Dabei wird eine gebogene Scheibe 1 angenommen. Die gebogene Scheibe weist am Ort des Eintritts eines Strahles in die gebogene Glasscheibe 1 einen Krümmungsradius (R+D) auf. Von einer Lichtquelle 3 wird nun Licht ausgestrahlt. Dieses Licht trifft auf die Scheibe und wird gemäß den bekannten Brechungsgesetzen beim Übergang von Luft zu Glas an der ersten Grenzfläche und von Glas zu Luft an der zweiten Grenzfläche gebrochen und trifft in das Auge 2 eines Betrachters. Dieser Strahl ist als durchgezogene Linie P dargestellt. Aus der Sicht des Betrachters scheint die Lichtquelle 3 am Ort 3' befindlich zu sein. Dies ist als Strahl P' dargestellt. Neben diesem als Primärstrahl bezeichneten Strahl P wird jedoch an der zweiten Grenzfläche Glas/Luft der Strahl nur teilweise in der oben beschriebenen Weise gebrochen; ein kleinerer Anteil wird an der zweiten Grenzfläche reflektiert und wird nochmals an der ersten Grenzfläche ein weiteres Mal reflektiert bevor der Strahl nun durch die zweite Grenzfläche tritt und in das Auge 2 des Betrachters trifft. Dieser Strahl, der sogenannte Sekundärstrahl, ist als gestrichelte Linie S dargestellt. Aus der Sicht des Betrachters scheint die Lichtquelle 3 auch am Ort 3" befindlich zu sein. Der von dem Primärstrahl P' und dem Sekundärstrahl S eingeschlossene Winkel η ist der so genannte Doppelbildwinkel.

Um diesem Doppelbild zu begegnen, kann nun vorgesehen sein, dass ein Keilwinkel zwischen den zwei in Figur 1 im Wesentlichen parallel angenommen Grenzschichten vorgesehen wird.

Nach J. P. Aclocque "Doppelbilder als störender optischer Fehler der Windschutzscheibe" in Z. Glastechn. Ber. 193 (1970) S. 193-198 lässt sich der Doppelbildwinkel in Abhängigkeit von dem Biegeradius der Glas-Scheibe und dem Einfallswinkel des Lichtstrahls nach folgender Beziehung berechnen:

$$\eta = \frac{2d}{R} \cdot \frac{\sin \varphi}{\sqrt{n^2 - \sin^2 \varphi}},$$

wobei

η den Doppelbildwinkel, n den Brechungsindex des Glases, d die Dicke der Glas-Scheibe,
R den Biegeradius der Glas-Scheibe am Ort des einfallenden Lichtstrahls, und φ den Einfallswinkel des Lichtstrahls zur Normalen auf die Tangente zur Scheibe bezeichnen.

Bei ebenen Glas-Scheiben ist der Doppelbildwinkel η gemäß

$$\eta = 2 \cdot \delta \cdot \frac{\sqrt{n^2 - \sin^2 \varphi}}{\cos \varphi}$$

abhängig von dem durch die Glasoberflächen gebildeten Keilwinkel δ.

Somit kann durch Gleichsetzung der zuvor genannten Formeln der notwendige Keilwinkel für die Eliminierung des Doppelbildes berechnet werden:

$$\delta = \frac{d}{R} \cdot \frac{\cos \varphi \cdot \sin \varphi}{n^2 - \sin^2 \varphi}.$$

In aller Regel wird dieser Keilwinkel dadurch realisiert, dass bei Verbundglasscheiben 1 eine keilförmige Zwischenschicht F zwischen eine erste Glasschicht $GS_1$ und eine zweite Glasschicht $GS_2$ eingelegt wird, siehe Figur 3. Dabei kann in aller Regel vereinfachend davon ausgegangen werden, dass der Brechungsindex n konstant ist, da der Unterschied des Brechungsindex der Zwischenschicht F und den Glasschichten $GS_1$, $GS_2$ eher gering ist, sodass durch den geringen Unterschied kaum eine Wirkung ausgeht.

Auch bei gebogenen Windschutzscheiben kann diese Idee angewendet werden. In aller Regel werden hierzu vereinfachend der Einfallswinkel und der Biegeradius für einen Referenzaugpunkt angenommen, und der damit ermittelte Keilwinkel für die gesamte Windschutzscheibe angewendet.

Bei großen Verbundglasscheiben 1, sogenannten Panoramascheiben, und/oder stärker gebogenen Verbundglasscheiben 1 ist diese Herangehensweise jedoch nicht mehr ausreichend, sodass hier in aller Regel ein in vertikaler Richtung sich ändernder Keilwinkelverlauf zu bestimmen ist.

Dann kann z.B. durch punktweise Berechnung entlang einer gedachten vertikalen Mittellinie einer Verbundglasscheibe und eventueller Interpolation ein Kompensationskeilwinkelprofil δ bestimmt werden. Nach Bestimmung des Kompensationskeilwinkelprofils kann eine entsprechende Zwischenschicht F hergestellt werden.

In Bezug auf Head-Up Displays entsteht ein dem Phänomen der Doppelbilder ähnliches Problem, dass als Geisterbild bezeichnet wird.

In Figur 2 ist der prinzipielle Zusammenhang der Entstehung von Geisterbildern in Reflexion an Hand eines Strahlenbildes dargestellt. Dabei wird eine gebogene Glas-Scheibe 1 angenommen. Die gebogene Glas-Scheibe 1 weist am Ort des Eintritts eines Strahles in die gebogene Glas-Scheibe 1 einen Krümmungsradius R auf. Von einer Lichtquelle 3, welche repräsentativ für ein Head-Up-Display HUD steht, wird nun Licht ausgestrahlt. Dieses Licht trifft entlang des Strahls $R_i$ von innen unter einem Winkel Θ auf die Glas-Scheibe 1 und wird dort unter demselben Winkel Θ wieder reflektiert. Der reflektierte Strahl $R_r$ trifft in das Auge 2 eines Betrachters. Dieser Strahlengang ist als durchgezogene Linie dargestellt. Aus der Sicht des Betrachters scheint die Lichtquelle 3 virtuell am Ort 3', d.h. vor der Glas-Scheibe 1, befindlich zu sein. Dies ist als Strahl $R_v$ dargestellt. Neben diesem ersten Stahl trifft ein weiterer Strahl in das Auge 2 des Betrachters. Dieser Strahl $R'_i$ stammt ebenfalls von der Lichtquelle 3. Allerdings dringt dieser Strahl $R'_i$ gemäß den bekannten Brechungsgesetzen in die Glas-Scheibe 1 an der inneren Grenzfläche Luft/Glas ein und wird an der äußeren Grenzfläche Glas/Luft reflektiert, bevor der Strahl nun durch die innere Grenzfläche tritt und als Strahl $R'_r$ in das Auge 2 des Betrachters trifft. Die innere Grenzfläche bezeichnet somit die Grenzfläche, die näher zum Betrachter befindlich ist, während die äußere Grenzfläche die Grenzfläche bezeichnet, die weiter entfernt vom Betrachter ist. Dieser Strahlengang ist als gestrichelte Linie dargestellt. Aus der Sicht des Betrachters scheint die Lichtquelle 3 virtuell auch am Ort 3", d.h. ebenfalls vor der Glas-Scheibe 1, befindlich zu sein. Dies ist als Strahl $R'_v$ dargestellt.

Um diesem Problem zu begegnen, kann nun der Keilwinkel so geändert werden, dass der an der äußeren Grenzfläche reflektierte Strahl $R'_r$ als auch der an der inneren Grenzfläche reflektierte Strahl $R_r$ in Bezug auf das Auge 2 des Betrachters sich überlagern, d.h. der an der äußeren Grenzfläche reflektierte Strahl tritt an der Stelle der Reflexion des an der inneren Grenzfläche auftreffenden Strahls aus.

Wird dies nur für eine einzige Augposition durchgeführt, so kann der hieraus ermittelte Keilwinkel jedoch zu nicht optimalen Ergebnissen führen. Dies ist unter anderem dadurch zu erklären, dass sowohl die Körpergrößen von Fahrern, für die die Head-Up-Displays primär bestimmt sind, als auch die Sitzposition sehr unterschiedlich sind, sodass es eine Vielzahl möglicher Augposition gibt. Das führt dazu, dass sich das virtuelle Display abhängig von der Augposition an unterschiedlichen Stellen befindet und entsprechend ergibt sich für jede dieser Augpositionen ein unter Umständen anderer Wert für einen optimierten Keilwinkel. Zudem führt ein Keilwinkel ausschließlich optimiert für Geisterbilder in aller Regel zu einer Überkompensation von Doppelbildern, sodass die hierdurch hervorgerufenen Doppelbilder wiederum problematisch in Bezug auf die Wahrnehmung des Betrachters und/oder die Einhaltung gesetzlicher Prüfvorschriften und/oder die Einhaltung von Kundenspezifikationen in Bezug auf Doppelbilder sind.

Keilwinkelprofile, die sowohl die unterschiedlichen Augpositionen berücksichtigen, also auch die Kompensation von Doppelbildern im HUD-Bereich sind in horizontaler als auch in vertikaler Richtung nicht konstant. Die sich daraus ergebenden Dickenprofile für die Zwischenschicht F sind über einfache Extrusionsverfahren nicht herstellbar.

In Figur 4 ist ein Bereich einer erfindungsgemäßen thermoplastischen Kunststofffolie F im Querschnitt gezeigt. Die Kunststofffolie F besteht im Beispiel aus PVB. Im umgebenden Bereich A beträgt die Dicke h1 0,76 mm und ist im Wesentlichen konstant. Im festgelegten Bereich K nimmt die Dicke ab. An der dünnsten Stelle ist die thermoplastische Kunststofffolie F 0,56 mm dick. Das heißt, die Dickendifferenz $\Delta h2_{min}$ zwischen den Dicken im umgebenden Bereich und an der dünnsten Stelle im festgelegten Bereich beträgt 0,76 mm - 0,56 mm = 0,20 mm = $\Delta h2_{min}$. Die Folie F ist im festgelegten Bereich dünner als im umgebenden Bereich, das heißt auch an ihrer dicksten Stelle ist die Dicke $h2_{max}$ kleiner als die Dicke h1. Im festgelegten Bereich K steigt der Keilwinkel im ersten Grenzbereich g1 zunächst langsam an und nimmt dann in einem zentralen Bereich entsprechend eines zuvor optimierten Profils zu. Anschließend nimmt der Keilwinkel in einem zweiten Grenzbereich g2 langsam wieder ab, um den Übergang zum umgebenden Bereich A möglichst wenig sichtbar zu gestalten. Dementsprechend nimmt die Dicke der Folie zunächst langsam ab im ersten Grenzbereich g1, verändert sich dann in einem zentralen Bereich entsprechend eines zuvor optimierten Profils und nimmt dann langsam wieder zu im zweiten Grenzbereich g2. Diese Anordnung mit zwei Grenzbereichen mit langsam steigendem bzw. fallendem Keilwinkel oben und unten bzw. rechts und links in Bezug auf eine eingebaute Windschutzscheibe ist besonders vorteilhaft, um die optische Beeinträchtigung am Übergang zwischen umgebendem Bereich A und festgelegtem Bereich K minimal zu gestalten. Im Querschnitt ist sichtbar, dass entlang der zweiten Oberfläche 10.2 kein Materialabtrag stattgefunden hat, das heißt die zweite Oberfläche im setzt sich im festgelegten Bereich in der gleichen Ebene fort wie im umgebenden Bereich A parallel zur ersten Oberfläche 10.1 im umgebenden Bereich. Somit wurde im festgelegten Bereich nur von der Seite der ersten Oberfläche 10.1 Material abgetragen.

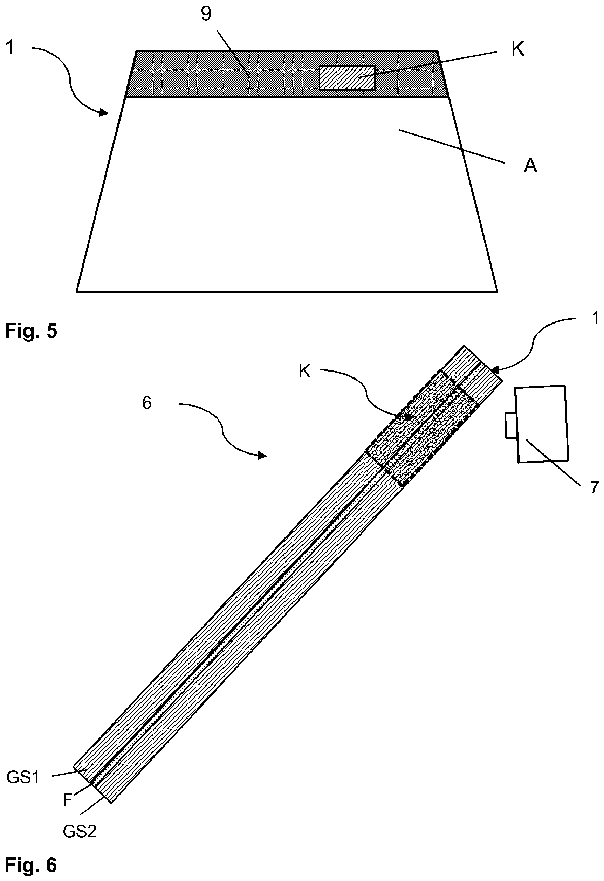

In Figur 5 ist eine Aufsicht auf eine erfindungsgemäße Verbundglasscheibe 1 gezeigt. Die Verbundglasscheibe ist als Windschutzscheibe eines Personenkraftwagens vorgesehen. Die obere Kante in der Zeichnung grenzt im Kraftwagen an die Dachkante und die untere Kante an die Motorraumkante. Im oberen Drittel der Verbundglasscheibe außerhalb des Durchsichtbereichs ist ein Kamerafenster K angeordnet. Die Windschutzscheibe weist im oberen Randbereich bevorzugt einen Abdeckdruck 9 auf. Abdeckdrucke sind für Fahrzeugscheiben außerhalb des zentralen Sichtbereichs üblich, um Anbauteile zu verdecken oder den Klebstoff, mit dem die Fahrzeugscheibe mit der Karosserie verbunden ist, vor UV-Strahlung zu schützen. Der Abdeckdruck besteht typischerweise aus einem im Siebdruckverfahren aufgebrachten und eingebrannten schwarzen oder dunklen Emaille. Im Beispiel umrahmt der Abdeckdruck 9 das Kamerafenster K der Fahrzeugscheibe umlaufend, um die dahinterliegende Kamera zu verdecken. Die Verbundglasscheibe besteht aus zwei Glasschichten, GS1 und GS2, und einer thermoplastischen Kunststofffolie F, die zwischen diesen Glasschichten angeordnet ist. Die Glasschichten GS1 und GS2 bestehen aus Kalk-Natron-Glas und haben eine Dicke von 2,1 mm. Die thermoplastische Kunststofffolie F ist ausgebildet wie in Figur 4 beschrieben. Der festgelegte Bereich K bildet das Kamerafenster.

In Figur 6 ist eine mögliche Kamera-Anordnung 6 aus der beschriebenen Verbundglasscheibe 1 und einer Kamera 7 gezeigt. Die Glasschicht GS1 der Verbundglasscheibe 1 ist zur Außenseite des Kraftwagens gerichtet und die Glasschicht GS2 zur Innenseite. Die Kamera 7 ist im Innenraum des Fahrzeugs angeordnet und nimmt die Lichtstrahlen auf, die von außen nach innen durch die Verbundglasscheibe 1 einfallen. Die Kamera ist auf den festgelegten Bereich gerichtet; das bedeutet, sie ist so montiert, dass die Lichtstrahlen durch den Bereich mit dem optimierten Keilwinkelprofil einfallen. So können die Doppelbilder in Transmission effizient verringert werden. Dies kann zum Beispiel erfolgreich im Bereich der Fahrspurassistenzsysteme eingesetzt werden.

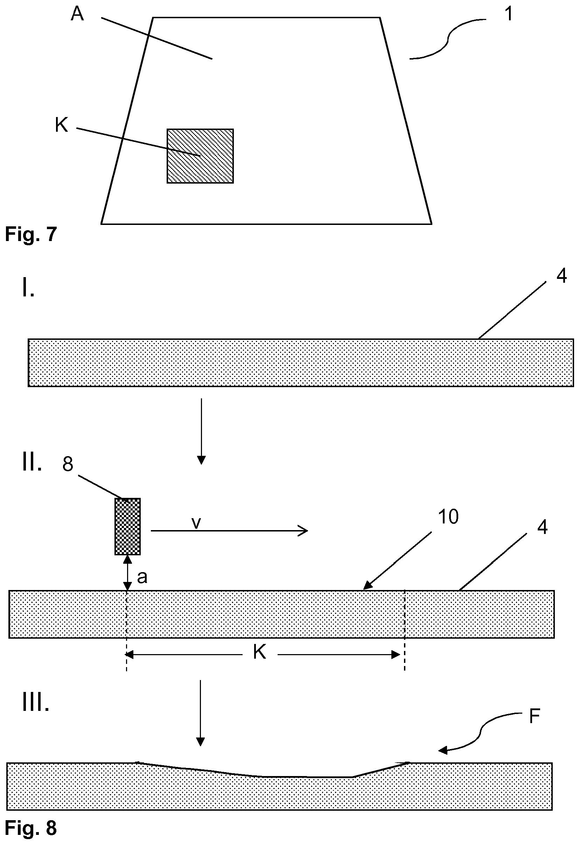

In Figur 7 ist eine Aufsicht auf eine erfindungsgemäße Verbundglasscheibe 1 mit einem HUD-Bereich gezeigt, der allseitig vom umgebenden Bereich A umgeben ist. Der HUD-Bereich befindet sich im festgelegten Bereich K, in dem ein optimiertes Keilwinkelprofil zur Vermeidung von Geisterbildern und Doppelbildern angeordnet ist. Der HUD-Bereich befindet sich im gezeigten Beispiel auf der linken Seite der Windschutzscheibe im Durchsichtbereich.

Bei der Herstellung der Verbundglasscheibe 1 aus Glasschicht GS1, Glasschicht GS2 und erfindungsgemäßer thermoplastischer Kunststofffolie F, kann dieses Design leicht für einen Rechtslenker angepasst werden, indem im festgelegten Bereich K thermoplastisches Polymer entsprechend eines zuvor optimierten Keilwinkelprofils auf der rechten Seite abgetragen wird.

In Figur 8 ist beispielhaft ein erfindungsgemäßer Verfahrensablauf dargestellt. Dabei wird im I. Schritt eine thermoplastische Kunststofffolie mit im Wesentlichen konstanter Dicke 4 bereitgestellt. Im II. Schritt wird der Laser 8 mit einem Abstand a von etwa 1700 mm von der Oberfläche 10 der thermoplastischen Kunststofffolie mit konstanter Dicke 4 im festgelegten Bereich K positioniert. Als Laser eignet sich zum Beispiel ein $CO_2$-Laser mit einer Wellenlänge von 10,6 $\mu$m, und einer Leistung von 250 W. Mit diesem Laser wurde der festgelegte Bereich in Linien 11 abgefahren (siehe Figur 9). In Figur 9 ist eine Draufsicht auf einen festgelegten Bereich K gezeigt, der mit einem Laser in Linien behandelt wird. Dabei wurde mit einer geringen Leistung des Lasers begonnen und diese schrittweise gesteigert. Bei einer Geschwindigkeit v von 10 m/s wurde im festgelegten Bereich in Linien Polymer abgetragen. Der Laser wurde nach einer Linie jeweils um 0,1 mm versetzt und dann entlang der nächsten Linie Polymer abgetragen. Nach etwa 50 Linien (5 mm) wurde die Leistung P des Lasers erhöht, um den Polymerabtrag zu erhöhen. Somit wird auch die Abtragungstiefe erhöht. Dieses Verfahren wird so lange durchgeführt, bis das gewünschte Profil erhalten wird. Durch diese schrittweise Erhöhung der Leistung konnte gezielt der gewünschte Keilwinkel erhalten werden.

In Figur 10 ist eine thermoplastische Folie F gezeigt, die im festgelegten Bereich an ihrer ersten Oberfläche 10.1 und an ihrer zweiten Oberfläche 10.2 mit einem Laser behandelt wurde. Dort wurde spiegelsymmetrisch eine Abtragung von thermoplastischem Polymer vorgenommen. So können größere Keilwinkel erzielt werden, wobei die absoluten Abtragungstiefen an den Oberflächen kleiner sind als wenn nur an einer Oberfläche eine Abtragung erfolgt.

In Figur 11 ist eine thermoplastische Folie F gezeigt, die im festgelegten Bereich wie in Figur 10 an der ersten Oberfläche 10.1 und an der zweiten Oberfläche 10.2 mit einem Laser behandelt wurde. Lediglich der Keilwinkelverlauf im festgelegten Bereich K unterscheidet sich. Dabei wurde an jeder Oberfläche 10.1 und 10.2 gleichviel Material abgetragen. Das führt zu einer spiegelsymmetrischen Anordnung der beiden Oberflächen 10.1 und 10.2 im festgelegten Bereich K. Dabei ist die Spiegelebene / Symmetrieebene S die Ebene, die parallel zu den Ebenen der ersten Oberfläche 10.1 und zweiten Oberfläche 10.2 im umgebenden Bereich mittig zwischen diesen verläuft. Die Spiegelebene S verläuft demnach in einem Abstand von ½ h1 parallel zur Ebene der ersten Oberfläche 10.1 und parallel zur Ebene der zweiten Oberfläche 10.2 im umgebenden Bereich A.

**Bezugszeichenliste**

| | |
|---|---|
| GS1 | Glasschicht 1, Glasscheibe 1 |
| GS2 | Glasschicht 2, Glasscheibe 2 |
| F | Thermoplastische Kunststofffolie |
| K | Festgelegter Bereich |
| A | Umgebender Bereich |
| g1 | erster Grenzbereich |
| g2 | zweiter Grenzbereich |
| h1 | Dicke der unbearbeiteten thermoplastischen Folie, Dicke der thermoplastischen Kunststofffolie im umgebenden Bereich A |
| h2 | Dicke der thermoplastischen Kunststofffolie im festgelegten Bereich |
| $h2_{max}$ | maximale Dicke der thermoplastischen Kunststofffolie im festgelegten Bereich |
| S | Symmetrieebene, Spiegelebene |
| 1 | Glasscheibe |
| 2 | Auge |
| 3 | Lichtquelle, HUD-Projektor |
| 4 | thermoplastische Kunststofffolie mit konstanter Dicke, unbearbeitete thermoplastische Kunststofffolie |
| 5 | HUD-Anordnung |
| 6 | Kamera-Anordnung |
| 7 | Kamera |
| 8 | Laser |
| 9 | Abdeckdruck |
| 10 | Oberfläche der thermoplastischen Folie |
| 10.1 | erste Oberfläche der thermoplastischen Folie |
| 10.2 | zweite Oberfläche der thermoplastischen Folie |
| 11 | Linie |

**Patentansprüche**

1. Thermoplastische Kunststofffolie (F) geeignet als Zwischenschicht für eine Verbundglasscheibe (1), wobei die thermoplastische Kunststofffolie (F) mindestens

   - einen festgelegten Bereich (K) umfasst, der für ein Kamerafenster oder einen HUD (Head-Up Display)-Bereich vorgesehen ist, der einen von Null verschiedenen Keilwinkel aufweist, und
   - einen den festgelegten Bereich (K) allseitig umgebenden Bereich (A), in dem die thermoplastische Kunststofffolie eine im Wesentlichen konstante Dicke (h1) aufweist, wobei die maximale Dicke ($h2_{max}$) im festgelegten Bereich (K) der thermoplastischen Kunststofffolie kleiner ist als die Dicke (h1) im umgebenden Bereich (A).

2. Thermoplastische Kunststofffolie (F) nach Anspruch 1, wobei der festgelegte Bereich (K) einen sich ändernden Keilwinkel aufweist.

3. Thermoplastische Kunststofffolie (F) nach Anspruch 1 oder 2, wobei die Dicke (h1) der thermoplastischen Kunststofffolie im umgebenden Bereich (A) zwischen 50 μm und 2000 μm, bevorzugt zwischen 300 μm und 850 μm und besonders bevorzugt zwischen 380 μm und 760 μm liegt.

4. Thermoplastische Kunststofffolie (F) nach einem der Ansprüche 1 bis 3, wobei die thermoplastische Kunststofffolie (F) im Wesentlichen aus PVB besteht.

5. Thermoplastische Kunststofffolie (F) nach einem der Ansprüche 1 bis 4, wobei die thermoplastische Kunststofffolie (F) eine geräuschmindernde Wirkung aufweist.

6. Thermoplastische Kunststofffolie (F) nach einem der Ansprüche 1 bis 5, wobei der festgelegte Bereich (K) sich über eine Fläche von 2 000 mm$^2$ bis 200 000 mm$^2$ erstreckt, bevorzugt über eine Fläche von 10 000 mm$^2$ bis 200 000 mm$^2$ für einen HUD-Bereich und über eine Fläche von 2 000 mm$^2$ - 10 000 mm$^2$ für ein Kamerafenster.

7. Thermoplastische Kunststofffolie (F) nach einem der Ansprüche 1 bis 6, wobei die thermoplastische Kunststofffolie (F) eine erste Oberfläche (10.1) und eine gegenüberliegende zweite Oberfläche (10.2) hat, deren Ebenen im umgebenden Bereich (A) parallel zueinander angeordnet sind, und wobei die thermoplastische Kunststofffolie im festgelegten Bereich (K) eine Spiegelebene/Symmetrieebene (S) aufweist, die parallel zu den Ebenen der ersten Oberfläche (10.1) und zweiten Oberfläche (10.2) im umgebenden Bereich mittig zwischen diesen Ebenen angeordnet ist.

8. Verfahren zur Herstellung einer thermoplastischen Kunststofffolie (F) geeignet als Zwischenschicht für eine Verbundglasscheibe, wobei die thermoplastische Kunststofffolie (F) mindestens einen festgelegten Bereich (K) umfasst, der einen von Null verschiedenen Keilwinkel aufweist, und einen umgebenden Bereich (A) umfasst, in dem die thermoplastische Kunststofffolie (F) eine im Wesentlichen konstante Dicke (h1) aufweist, wobei die maximale Dicke ($h2_{max}$) im festgelegten Bereich (K) der thermoplastischen Kunststofffolie kleiner ist als die Dicke (h1) im umgebenden Bereich (A), das Verfahren mindestens umfassend die Schritte:

- Bereitstellung einer thermoplastischen Kunststofffolie mit konstanter Dicke (4),
- Abtragung von thermoplastischem Polymer mithilfe eines Lasers (8) in mindestens einem festgelegten Bereich (K).

**9.** Verfahren nach Anspruch 8, wobei der Keilwinkel im festgelegten Bereich (K) sich ändert.

**10.** Verfahren nach Anspruch 8 oder 9, wobei zunächst eine erste Oberfläche (10.1) der thermoplastischen Kunststofffolie mit konstanter Dicke (4) im festgelegten Bereich (K) mit dem Laser (8) behandelt wird und anschließend die zweite Oberfläche (10.2) der thermoplastischen Kunststofffolie in demselben festgelegten Bereich (K) mit dem Laser (8) behandelt wird.

**11.** Verfahren nach Anspruch einem der Ansprüche 8 bis 10, wobei die Abtragungstiefe zwischen 0,10 mm und 0,30 mm, bevorzugt zwischen 0,15 mm und 0,25 mm liegt.

**12.** Verbundglasscheibe (1), mindestens umfassend eine erste Glasschicht (GS1), eine zweite Glasschicht (GS2) und eine thermoplastische Kunststofffolie (F) nach einem der Ansprüche 1 bis 7, wobei die thermoplastische Kunststofffolie (F) zwischen der ersten Glasschicht (GS1) und der zweiten Glasschicht (GS2) angeordnet ist.

**13.** Verfahren zur Herstellung einer Verbundglasscheibe (1) aufweisend die Schritte

- Bereitstellen einer ersten Glasscheibe (GS1)
- Bereitstellen einer zweiten Glasscheibe (GS2)
- Auflegen einer thermoplastischen Kunststofffolie (F) nach einem der Ansprüche 1 bis 7 auf die erste Glasscheibe (GS1),
- Auflegen einer zweiten Glasscheibe (GS2) auf die thermoplastische Kunststofffolie (F) und
- Verbinden der zweiten Glasscheibe (GS2) mit der thermoplastischen Kunststofffolie (F).

**14.** Head-Up-Display-Anordnung (5), aufweisend einen Projektor (3) zur Beleuchtung eines Head-Up-Display-Bereiches einer Verbundglasscheibe (1) und eine Verbundglasscheibe (1) nach Anspruch 12, wobei der Projektor (3) im Betrieb im Wesentlichen den festgelegten Bereich (K) beleuchtet.

**15.** Kamera-Anordnung (6), aufweisend eine Kamera (7) und eine Verbundglasscheibe (1) nach Anspruch 12, wobei die Kamera (7) auf den festgelegten Bereich (K) gerichtet ist und Lichtstrahlen aufnimmt, die durch die Verbundglasscheibe (1) einfallen.

**16.** Verwendung der Verbundglasscheibe (1) nach Anspruch 12 als Frontscheibe mit Head-Up-Display und / oder Kamerafenster in Fortbewegungsmitteln zu Wasser, zu Land und zur Luft.

**Claims**

**1.** Thermoplastic film (F) suitable as an intermediate layer for a laminated glass pane (1), wherein the thermoplastic film (F) comprises at least

     - a defined region (K), which is provided for a camera window or an HUD (head-up display) region that has a non-zero wedge angle, and
     - a region (A) surrounding the defined region (K) on all sides, in which the thermoplastic film has a substantially constant thickness (h1), wherein the maximum thickness ($h2_{max}$) in the defined region (K) of the thermoplastic film is less than the thickness (h1) in the surrounding region (A).

**2.** Thermoplastic film (F) according to claim 1, wherein the defined region (K) has a variable wedge angle.

**3.** Thermoplastic film (F) according to claim 1 or 2, wherein the thickness (h1) of the thermoplastic film in the surrounding region (A) is between 50 $\mu$m and 2000 $\mu$m, preferably between 300 $\mu$m and 850 $\mu$m, and particularly preferably between 380 $\mu$m and 760 $\mu$m.

**4.** Thermoplastic film (F) according to one of claims 1 through 3, wherein the thermoplastic film (F) is made substantially of PVB.

**5.** Thermoplastic film (F) according to one of claims 1 through 4, wherein the thermoplastic film (F) has a noise-reducing effect.

**6.** Thermoplastic film (F) according to one of claims 1 through 5, wherein the defined region (K) extends over an area of 2000 mm$^2$ to 200,000 mm$^2$, preferably over an area of 10,000 mm$^2$ to 200,000 mm$^2$ for an HUD region and over an area of 2000 mm$^2$ - 10,000 mm$^2$ for a camera window.

**7.** Thermoplastic film (F) according to one of claims 1 through 6, wherein the thermoplastic film (F) has a first surface (10.1) and an opposite second surface (10.2), whose planes are arranged parallel to one another in the surrounding region (A), and wherein the thermoplastic film has, in the defined region (K), a mirror plane/plane of symmetry (S), which is arranged parallel to the planes of the first surface (10.1) and the second surface (10.2) in the surrounding region centrally between these planes.

**8.** Method for producing a thermoplastic film (F) suitable as an intermediate layer for a laminated glass pane, wherein the thermoplastic film (F) comprises at least a defined region (K) that has a non-zero wedge angle, and comprises a surrounding region (A), in which the thermoplastic film (F) has a substantially constant thickness (h1), wherein the maximum thickness ($h2_{max}$) in the defined region (K) of the thermoplastic film is less than the thickness (h1) in the surrounding region (A), the method comprising at least the steps:

- Providing a thermoplastic film having a constant thickness (4),
- Ablating thermoplastic polymer using a laser (8) in at least one defined region (K).

9. Method according to claim 8, wherein the wedge angle in the defined region (K) changes.

10. Method according to claim 8 or 9, wherein first, a first surface (10.1) of the thermoplastic film having a constant thickness (4) is treated with the laser (8) in the defined region (K) and then, the second surface (10.2) of the thermoplastic film is treated with the laser (8) in the same defined region (K).

11. Method according to one of claims 8 through 10, wherein the ablation depth is between 0.10 mm and 0.30 mm, preferably between 0.15 mm and 0.25 mm.

12. Laminated glass pane (1), at least comprising a first glass layer (GS1), a second glass layer (GS2), and a thermoplastic film (F) according to one of claims 1 through 7, wherein the thermoplastic film (F) is arranged between the first glass layer (GS1) and the second glass layer (GS2).

13. Method for producing a laminated glass pane (1), comprising the steps

- Providing a first glass pane (GS1)
- Providing a second glass pane (GS2)
- Placing a thermoplastic film (F) according to one of claims 1 through 7 on the first glass pane (GS1),
- Placing a second glass pane (GS2) on the thermoplastic film (F), and
- Joining the second glass pane (GS2) to the thermoplastic film (F).

14. Head-up display arrangement (5), comprising a projector (3) for illuminating a head-up display area of a laminated glass pane (1) and a laminated glass pane (1) according to claim 12, wherein, during operation, the projector (3) substantially illuminates the defined region (K).

15. Camera arrangement (6), comprising a camera (7) and a laminated glass pane (1) according to claim 12, wherein the camera (7) is directed at the defined region (K) and records light beams that pass through the laminated glass pane (1).

16. Use of the laminated glass pane (1) according to claim 12 as a front pane with a head-up display and / or camera window in means of transportation on water, on land, and in the air.

**Revendications**

1. Feuille thermoplastique (F) appropriée en tant que couche intermédiaire pour une plaque de verre feuilleté (1), la feuille thermoplastique (F) au moins

- comportant une région définie (K), qui est prévue pour une fenêtre d'appareil de prise de vues ou une région d'affichage tête haute (région HUD (Head-Up Display)), qui présente un angle de coin différent de zéro ; et
- une région (A) qui entoure de tous les côtés la région définie (K) et dans laquelle la feuille thermoplastique présente une épaisseur sensiblement constante (h1), l'épaisseur maximale ($h2_{max}$) dans la région définie (K) de la feuille thermoplastique étant inférieure à l'épaisseur (h1) dans la région environnante (A).

2. Feuille thermoplastique (F) selon la revendication 1, dans laquelle la région définie (K) présente un angle de coin variable.

3. Feuille thermoplastique (F) selon l'une des revendications 1 ou 2, dans laquelle l'épaisseur (h1) de la feuille thermoplastique dans la région environnante (A) se situe entre 50 $\mu$m et 2000 $\mu$m, de préférence entre 300 $\mu$m et 850 $\mu$m et de manière particulièrement préférée entre 380 $\mu$m et 760 $\mu$m.

4. Feuille thermoplastique (F) selon l'une des revendications 1 à 3, dans laquelle la feuille thermoplastique (F) est constituée sensiblement de PVB.

5. Feuille thermoplastique (F) selon l'une des revendications 1 à 4, dans laquelle la feuille thermoplastique (F) présente un effet d'affaiblissement acoustique.

6. Feuille thermoplastique (F) selon l'une des revendications 1 à 5, dans laquelle la région définie (K) s'étend sur une surface de 2000 mm$^2$ à 200 000 mm$^2$, de préférence sur une surface de 10 000 m$^2$ à 200 000 mm$^2$ pour une région HUD et sur une surface de 2000 mm$^2$ - 10 000 mm$^2$ pour une fenêtre d'appareil de prise de vues.

7. Feuille thermoplastique (F) selon l'une des revendications 1 à 6, dans laquelle la feuille thermoplastique (F) a une première surface (10.1) et une seconde surface (10.2) opposée, dont les plans sont disposés parallèlement l'un à l'autre dans la région environnante (A), et dans laquelle la feuille thermoplastique présente dans la région définie (K) un plan miroir/plan de symétrie (S), qui est disposé parallèlement aux plans de la première surface (10.1) et de la seconde surface (10.2) dans la région environnante de façon centrale entre ces plans.

8. Procédé de fabrication d'une feuille thermoplastique (F) appropriée en tant que couche intermédiaire pour une plaque de verre feuilleté, la feuille thermoplastique (F) comportant au moins une région définie (K), qui présente un angle de coin différent de zéro, et comportant une région environnante (A) dans laquelle la feuille thermoplastique (F) présente une épaisseur sensiblement constante (h1), l'épaisseur maximale (h2$_{max}$) dans la région définie (K) de la feuille thermoplastique étant inférieure à l'épaisseur (h1) dans la région environnante (A), le procédé comportant au moins les étapes consistant à :

- se procurer une feuille thermoplastique ayant une épaisseur constante (4) ;
- réaliser une ablation de polymère thermoplastique au moyen d'un laser (8) dans au moins une région définie (K) .

9. Procédé selon la revendication 8, dans lequel l'angle de coin varie dans la région définie (K).

10. Procédé selon l'une des revendications 8 ou 9, dans lequel tout d'abord une première surface (10.1) de la feuille thermoplastique avec épaisseur constante (4) dans la région définie (K) est traitée par le laser (8) et ensuite la seconde surface (10.2) de la feuille thermoplastique dans la même région définie (K) est traitée par le laser (8).

11. Procédé selon l'une des revendications 8 à 10, dans lequel la profondeur d'ablation se situe entre 0,10 mm et 0,30 mm, de préférence entre 0,15 mm et 0,25 mm.

12. Plaque de verre feuilleté (1), comportant au moins une première couche de verre (GS1), une seconde couche de verre (GS2) et une feuille thermoplastique (F) selon l'une des revendications 1 à 7, dans laquelle la feuille thermoplastique (F) est disposée entre la première couche de verre (GS1) et la seconde couche de verre (GS2).

13. Procédé de fabrication d'une plaque de verre feuilleté (1) comportant les étapes suivantes :

- se procurer une première plaque de verre (GS1) ;

- se procurer une seconde plaque de verre (GS2) ;
- disposer une feuille thermoplastique (F) selon l'une des revendications 1 à 7 sur la première plaque de verre (GS1) ;
- disposer une seconde plaque de verre (GS2) sur la feuille thermoplastique (F) ; et
- relier la seconde plaque de verre (GS2) avec la feuille thermoplastique (F).

14. Agencement d'affichage tête haute (5), présentant un projecteur (3) pour l'éclairage d'une région d'affichage tête haute d'une plaque de verre feuilleté (1) et une plaque de verre feuilleté (1) selon la revendication 12, le projecteur (3) éclairant en fonctionnement sensiblement la région définie (K).

15. Agencement d'appareil de prise de vues (6), présentant un appareil de prise de vues (7) et une plaque de verre feuilleté (1) selon la revendication 12, dans lequel l'appareil de prise de vues (7) est dirigé sur la région définie (K) et reçoit des rayons lumineux, qui passent à travers la plaque de verre feuilleté (1).

16. Utilisation de la plaque de verre feuilleté (1) selon la revendication 12 en tant que vitre frontale avec dispositif d'affichage tête haute et/ou fenêtre d'appareil de prise de vues dans des moyens de locomotion sur l'eau, sur terre et dans les airs.

**Fig. 1**

**Fig. 2**

1

GS1    GS2

F

**Fig. 3**

F    $\Delta h2_{min}$    10.1    h1

$h2_{max}$

A    K    A

g1    g2    10.2

**Fig. 4**

**Fig. 5**

**Fig. 6**

**Fig. 7**

**Fig. 8**

**Fig. 9**

**Fig. 10**

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015086234 A1
- WO 2015086233 A1
- WO 2009071135 A1
- US 8451541 B2
- US 7060343 B2
- US 6881472 B2
- US 6636370 B2
- US 5013134 A
- DE 19611483 A1
- DE 19535053 A1
- EP 0647329 B1
- EP 1063205 B1
- EP 2883693 A1

**In der Beschreibung aufgeführte Nicht-Patentliteratur**

- **NACH J. P.** Doppelbilder als störender optischer Fehler der Windschutzscheibe. *Z. Glastechn. Ber.,* 1970, vol. 193, 193-198